# EUROPEAN PATENT APPLICATION

(11) **EP 3 872 045 A1**
(43) Date of publication of application: **01.09.2021**
(21) Application number: 19937358.0
(22) Date of filing: 26.12.2019
(51) Int. Cl.: C03C 13/04, C03C 25/1065, C03C 25/50, C03C 25/328

(54) **OPTICAL FIBER**

(71) Applicant: Zhongtian Technology Fiber Potics Co., Ltd, Economic Development Zone Nantong City Jiangsu 226000 (CN); Jiangsu Zhongtian Technology Co., Ltd., Nantong, Jiangsu 226463 (CN); Jiangdong Science and Technology Co., Ltd, Rudong County Economic Development Zone Nantong Jiangsu 226400 (CN)
(72) Inventor: DING, Chunlai, Jiangsu 226000 (CN); YANG, Guojie, Jiangsu 226000 (CN); CAO, Shanshan, Jiangsu 226000 (CN); WANG, Zhen, Jiangsu 226000 (CN); XU, Haitao, Jiangsu 226000 (CN); YOU, Guanglei, Jiangsu 226000 (CN); LIU, Zhizhong, Jiangsu 226000 (CN); SU, Haiyan, Jiangsu 226000 (CN); XUE, Chi, Jiangsu 226000 (CN); XUE, Jiping, Jiangsu 226463 (CN)
(74) Representative: Zaboliene, Reda
(86) International application number: PCT/CN2019/128870
(87) International publication number: WO 2021/128211

(57) **Abstract**

An optical fiber includes, from inside to outside, a quartz core layer, a quartz cladding layer, a primary coating layer made of a first polyimide coating material having a viscosity of 5000 to 8000 cps, and a secondary coating layer made of a second polyimide coating material having a viscosity of 6000 to 7000 cps. The optical fiber is resistant to temperatures of 300 to 350 degrees Celsius. The optical fiber of the present disclosure has two polyimide coating layers. By controlling the viscosity and the respective formulas of the polyimides, the optical fiber is not only resistant to high temperatures but also has low attenuation and high mechanical strength. The optical fiber is resistant to the temperature of 300 to 350 degrees Celsius. The attenuation is less than or equal to 0.8 dB/km at 1310nm, and less than or equal to 0.6dB/km at 1550nm. The screening strength is higher than 100kpsi. The optical fiber can be used in harsh environments, which has high corrosion resistance and reliability. The optical fiber can also be used in seabed.

## Description

### FIELD

The disclosure relates to optical fibers, and more particularly, to an optical fiber that can resist temperatures of 300 degrees Celsius to 350 degrees Celsius.

### BACKGROUND

Compared with traditional sensors, optical fiber sensors have advantages of high sensitivity, immunity to electromagnetic interference, good electrical insulation, resistance to corrosion, simple structure, and small size. With the development of the sensors, the optical fiber sensors are developed to be used in extreme environments, such as oil and gas exploration, steam pipeline monitoring, aerospace, and shipping. In these environments, the ultraviolet cured polyacrylate coating material of the existing optical fiber may age, and so lose its protective effect on the optical fiber. Malfunctions and transmission problems may also occur. Thus, domestic and foreign manufacturers need to focus on the design and the development of the optical fibers with high temperature resistance.

At present, there are mainly four types of coating materials for the optical fiber with high temperature resistance, that is, polyacrylate with high temperature resistance, organic silicone, polyimide, and metal. The polyimide has excellent comprehensive properties. In theory, the polyimide can be used at 300 degrees Celsius for a long time, and at 350 degrees Celsius to 400 degrees Celsius for a short time. The polyimide can also maintain good performances in high pressure or vacuum environment, and is bio-friendly. Thus, the polyimide coating can be used in aerospace and biomedicine fields. However, the production process for the optical fibers having two polyimide coating layers is complicated, and the optical fibers produced therefrom has large attenuation and poor mechanical strength.

### SUMMARY

An optical fiber is needed, which can resist temperatures of 300 degrees Celsius to 350 degrees Celsius, and have low attenuation and high mechanical strength.

The present disclosure provides an optical fiber, including from inside to outside, a quartz core layer, a quartz cladding layer, a primary coating layer made of a first polyimide coating material having a viscosity of 5000 cps to 8000 cps, and a secondary coating layer made of a second polyimide coating material having a viscosity of 6000 cps to 7000 cps. The optical fiber can resist temperatures of 300 degrees Celsius to 350 degrees Celsius.

Furthermore, the first polyimide coating material includes at least one of a modified polyimide and a photosensitive polyimide, and the viscosities are 5000 cps to 6500cps and 5000 cps to 8000cps, respectively.

Furthermore, the modified polyimide is made by mixing raw materials of tetracarboxylic dianhydride compound and diamine compound that react in a first solvent, and the photosensitive polyimide is made by polymerizing dianhydride and diamine and then end capping the product with acrylic anhydride or acrylic chloride.

Furthermore, the tetracarboxylic dianhydride compound includes pyromellitic dianhydride, 3,3'4,4'-diphenyl ether tetracarboxylic dianhydride, 3,3',4,4'-benzophenone tetracarboxylic dianhydride, 3,3',4,4'-triphenyl bis ether tetracarboxylic dianhydride, 4,4'-(hexafluoroisopropylidene) phthalic anhydride, and any combination thereof.

Furthermore, the diamine compound includes p-phenylenediamine, m-phenylenediamine, 2,2'-bis(trifluoromethyl)-4,4'-diaminobiphenyl, 4,4'-diaminodiphenyl ether, amino modified polysiloxane, 1,3-bis(3-aminophenoxy)benzene, and any combination thereof.

Furthermore, the first solvent includes one of N,N-dimethylformamide, N,N-diethylacetamide, and N-methylpyrrolidone .

Furthermore, the second polyimide coating material includes common polyimide, or is made mixing raw materials of tetracarboxylic dianhydride compound and diamine compound that react in a second solvent. The tetracarboxylic dianhydride compound includes 3,3',4,4'-benzophenone tetracarboxylic dianhydride, 3,3',4,4'-diphenyl ether tetracarboxylic dianhydride, 4,4'-(hexafluoroisopropylidene)phthalic anhydride, 2,3,3',4'-biphenyltetracarboxylic dianhydride, 3,4,3',4'-biphenyltetracarboxylic dianhydride, and any combination thereof. The diamine compound includes p-phenylenediamine, m-phenylenediamine, 2,2'-bis(trifluoromethyl)-4,4'-diaminobiphenyl, 4,4'-bis(4-aminophenoxy)biphenyl, and any combination thereof. The second solvent is one of N,N-dimethylformamide, N,N-diethylacetamide, and N-methylpyrrolidone.

Furthermore, a solid content of the first polyimide coating material is 10% to 25%, and a solid content of the second polyimide coating material is 10% to 28%.

Furthermore, the optical fiber is a single-mode fiber or a multi-mode fiber.

Furthermore, a sum of single-side thicknesses of the primary coating layer and the secondary coating layer is 15µm to 23µm.

The optical fiber of the present disclosure has two polyimide coating layers. By controlling the viscosity and the formulas of the polyimide, the optical fiber can resist high temperatures while showing low attenuation and high mechanical strength. The optical fiber can reliably be used in harsh environments, which has high corrosion resistance and reliability. The optical fiber can also be used in seabed applications.

### BRIEF DESCRIPTION OF THE DRAWING

Implementations of the disclosure will now be described, with reference to the drawing.

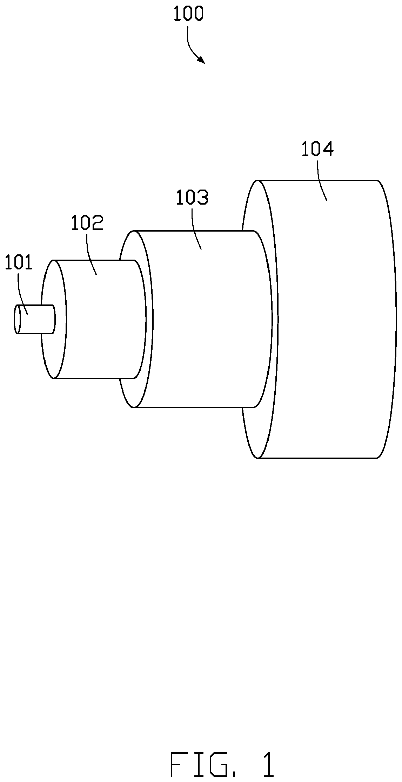

FIG. 1 is a diagrammatic view of an embodiment of an optical fiber.

Description of names of main elements:
Fiber 100
Quartz core layer 101
Quartz cladding layer 102
Primary coating layer 103
Secondary coating layer 104

### DETAILED DESCRIPTION OF THE DISCLOSURE

Implementations of the disclosure will be described by way of embodiments. It should be noted that non-conflicting details and features in a plurality of embodiments of the present disclosure may be combined with each other.

The disclosure is illustrative only, and changes may be made in the detail within the principles of the present disclosure. It will, therefore, be appreciated that the embodiments may be modified within the scope of the claims.

Unless otherwise defined, all technical terms used herein have the same meaning as commonly understood by one of ordinary skill in the art. The technical terms used herein are not to be considered as limiting the scope of the embodiments.

FIG. 1 illustrates an optical fiber 100 according to the present disclosure. The optical fiber 100 includes, from inside to outside, a quartz core layer 101, a quartz cladding layer 102, a primary coating layer 103 made of a first polyimide coating material having a viscosity of 5000 cps to 8000 cps, and a secondary coating layer 104 made of a second polyimide coating material having a viscosity of 6000 cps to 7000 cps. The optical fiber can resist temperatures of 300 degrees Celsius to 350 degrees Celsius. A sum of the single-side thicknesses of the primary coating layer 103 and the secondary coating layer (that is, the total thickness of the coating layers) is 15µm to 23µm. In an embodiment, the total thickness of the coating layers cannot be too thin, which would bring the strength of the optical fiber down to below 100 kpsi. The total thickness of the coating layers cannot be too great, otherwise, the quartz fiber can be compressed by the thick coating layer and suffer large internal stress, such compression causing attenuation and warpage of the optical fiber to deteriorate, and a liability to fracture because of brittleness during use.

In an embodiment, the optical fiber 100 may be single-mode or multi-mode quartz glass.

In an embodiment, the first polyimide coating material includes modified polyimide. The viscosity is 5000 cps to 6500 cps. A solid content of the first polyimide coating material is 10% to 25%.

The modified polyimide is made by mixing raw materials of tetracarboxylic dianhydride compound and diamine compound that react in a first solvent. The tetracarboxylic dianhydride compound includes pyromellitic dianhydride, 3,3'4,4'-diphenyl ether tetracarboxylic dianhydride, 3,3',4,4'-benzophenone tetracarboxylic dianhydride, 3,3',4,4'-triphenyl bis ether tetracarboxylic dianhydride, 4,4'-(hexafluoroisopropylidene) phthalic anhydride, and any combination thereof. The diamine compound includes p-phenylenediamine, m-phenylenediamine, 2,2'-bis(trifluoromethyl)-4,4'-diaminobiphenyl, 4,4'-diaminodiphenyl ether, amino modified polysiloxane, 1,3-bis(3-aminophenoxy)benzene, and any combination thereof. The first solvent includes one of N,N-dimethylformamide, N,N-diethylacetamide, and N-methylpyrrolidone.

In another embodiment, the first polyimide coating material can also be photosensitive polyimide with a viscosity of 5000 cps to 8000 cps. The photosensitive polyimide is made by polymerizing dianhydride and diamine and then end capping the product with acrylic anhydride or acrylic chloride.

In yet another embodiment, the first polyimide coating material may also be a combination of the photosensitive polyimide and the modified polyimide.

In an embodiment, the second polyimide coating material includes common polyimide (that is, the polyimide coating material commercially available), or modified polyimide made by mixing raw materials of tetracarboxylic dianhydride compound and diamine compound that react in a second solvent. A solid content of the second polyimide coating material is 10% to 28%. The viscosity is 6000 cps to 7000 cps.

The tetracarboxylic dianhydride compound includes 3,3',4,4'-benzophenone tetracarboxylic dianhydride, 3,3',4,4'-diphenyl ether tetracarboxylic dianhydride, 4,4'-(hexafluoroisopropylidene)phthalic anhydride, 2,3,3',4'-biphenyltetracarboxylic dianhydride, 3,4,3',4'-biphenyltetracarboxylic dianhydride, and any combination thereof. The diamine compound includes p-phenylenediamine, m-phenylenediamine, 2,2'-bis(trifluoromethyl)-4,4'-diaminobiphenyl, 4,4'-bis(4-aminophenoxy)biphenyl, and any combination thereof. The second solvent is one of N,N-dimethylformamide, N,N-diethylacetamide, and N-methylpyrrolidone.

The viscosity of the coating material is to be strictly controlled in the present disclosure. In detail, the viscosity of the coating material can be adjusted by heating. For example, when the viscosity of the coating material is too high, heating is needed, but the temperature cannot be too high. When the viscosity of the coating material is too low, the coating material may sag, and the thermal curing is not effective. When the viscosity of the coating material is too high, the coating material has poor adhesion and long curing time, and on the other hand, internal stress easily occurs after curing, which causes brittleness.

The following examples compare the performance of the optical fiber of the present disclosure with that of the existing product.

The performances of the optical fiber of the present disclosure are described when the fiber is coated with the first polyimide coating material and the second polyimide coating material through following experimental conditions.

123.06g of 4,4'-bis(4-aminophenoxy)biphenyl and 500mL of N,N-dimethylacetamide were added into a four-necked flask equipped with a stirrer. A thermometer was installed therein. The 4,4'-bis(4-aminophenoxy)biphenyl and the N,N-dimethylacetamide were stirred and dissolved at 50 degrees Celsius to 60 degrees Celsius. Then, 222.12g of 4,4'-(hexafluoroisopropylidene) phthalic anhydride were added in batches. The materials were reacted at 40 degrees Celsius for 18h to obtain the modified polyimide, that is, the second polyimide coating material.

The photosensitive polyimide coating was also prepared. First, the above steps were repeated, and 90 g of acryloyl chloride was added. The materials were reacted at a temperature not higher than 5 degrees Celsius to obtain the first polyimide coating material. The temperature not higher than 5 degrees Celsius was preferably 0 degree Celsius to 5 degrees Celsius.

The first polyimide coating material can also be prepared by adding 333.46g of amino-modified polysiloxane and 500mL of N,N-dimethylacetamide into a four-necked flask equipped with a stirrer. A thermometer was installed therein. The amino-modified polysiloxane and the N,N-dimethylacetamide were stirred and dissolved at 50 degrees Celsius to 60 degrees Celsius. 111.06g of 4,4'-(hexafluoroisopropylidene)phthalic anhydride and 101.32 g of 3,3',4,4'-triphenyl bis ether tetracarboxylic dianhydride were added in batches. The materials were reacted at 40 degrees Celsius for 18 h to obtain the organic silicone modified polyimide. The introduction of organic silicone into the polyimide reduces the modulus of the polyimide.

### Example 1

The single-mode optical fiber 100 for communication purpose has a quartz core layer 101 with a diameter of 9µm and a quartz cladding layer 102 with a diameter of 125µm. After the preform is melted, the preform passes through molds containing a photosensitive polyimide coating material with a viscosity of 5000 cps and a common polyimide coating material with a viscosity of 6000 cps successively, at a drawing speed of 30m/min. After two coating processes, the diameter of the coating layer reaches 155µm, that is, the sum of the single-side thicknesses of the primary coating layer 103 and the secondary coating layer 104 is 15µm. The structure of the optical fiber 100 is shown in FIG. 1, and the concentricity error between the cladding layer and the coating layer is less than or equal to 4% (generally less than or equal to 6%). The attenuation of the optical fiber is 0.428dB/km at 1310nm, and is 0.312dB/km at 1550nm. The screening strength of the optical fiber is 100kpsi. The fatigue parameter ND of the optical fiber is 22.

### Example 2

The single-mode optical fiber for communication purposes has a quartz core layer 101 with a diameter of 9 µm and a quartz cladding layer 102 with a diameter of 125 µm. After the preform is melted, the preform passes through molds containing the organic silicone modified polyimide coating material with a viscosity of 6500 cps and the modified polyimide coating material with a viscosity of 7000 cps, from top to bottom successively,. After two coating processes, the diameter of the coating layer reaches 165µm, that is, the sum of the single-side thicknesses of the primary coating layer 103 and the secondary coating layer 104 is 20µm. The structure of the optical fiber 100 is shown in FIG. 1. The concentricity error between the cladding layer and the coating layer is less than or equal to 4%. The attenuation of the optical fiber is 0.342dB/km at 1310nm, and is 0.228dB/km at 1550nm. The screening strength of the optical fiber is 100kpsi. The fatigue parameter ND of the optical fiber is 23.

### Example 3

The single-mode optical fiber in Example 2 is replaced with a multi-mode optical fiber. The diameter of the quartz core layer 101 is 62.5 µm, and the diameter of the quartz cladding layer 102 is 125 µm. After two coating processes, the diameter of the coating layer of the optical fiber reaches 165 µm, that is, the sum of the single-side thicknesses of the primary coating layer 103 and the secondary coating layer 104 is 20 µm. The attenuation of the optical fiber 100 is 2.73 dB/km at 850 nm, and is 0.78 dB/km at 1300 nm. The screening strength of the optical fiber is 200 kpsi.

### Comparative example 1

The structure is basically the same as that of Example 1, except that the two coating layers are both made by the thermally cured commercial polyimide coating material (common polyimide). The optical fiber 100 can resist a temperature of 350 degrees Celsius, but the diameter of the coating layer of the optical fiber is only 140µm, that is to say, the sum of the single-sided thickness of the primary coating layer and the secondary coating layer is 7.5µm. The solid content of the coating layer is low. The screening strength of the optical fiber is less than 100kpsi. The attenuation of the optical fiber is 2.68dB/km at 1310nm, and is 2.12dB/km at 1550nm.

Comparing Example 1 with Comparative Example 1, the screening strength of the optical fiber is less than 100kpsi when two coating layers are both made of common polyimide coating material. In particular, attenuation is much greater than the attenuation shown by the fiber of the present disclosure (≤0.8dB /km at 1310 nm, and ≤0.6dB/km at 1550nm). From Examples 1-3, when the coating layers of the optical fiber are made of the polyimide coating materials of the present disclosure, the coating layers not only retain the high temperature resistance of polyimide, but also solve the problem of common polyimide coated optical fiber, that is, high attenuation and low screening strength. The optical fiber of the disclosure shows an excellent and comprehensive performance. In another embodiment, the polyimide coating materials of the present disclosure can also include other formulas or composite formulas mentioned above, and the optical fiber can also obtain performance equivalent to the fibers of Examples 1-3. That is, the optical fiber can resist temperatures of 300 degrees Celsius to 350 degrees Celsius. The attenuation is less than or equal to 0.8 dB/km at 1310nm, and less than or equal to 0.6dB/km at 1550nm. The screening strength of optical fiber is higher than 100kpsi.

In summary, the present disclosure can control the total thickness of the coating layer by improving the formulas and the viscosity of the coating material. The optical fiber that can resist high temperatures of 300 degrees Celsius to 350 degrees Celsius is prepared. The attenuation is less than or equal to 0.8 dB/km at 1310nm, and less than or equal to 0.6dB/km at 1550nm. The screening strength is higher than 100kpsi. The optical fiber can be used in very harsh environments, which has high corrosion resistance and reliability. The optical fiber can also be used in seabed applications.

The embodiments shown and described above are only examples. Even though numerous characteristics and advantages of the present technology have been set forth in the foregoing description, together with details of the structure and function of the present disclosure, the disclosure is illustrative only, and changes may be made in the detail within the principles of the present disclosure, up to and including the full extent established by the broad general meaning of the terms used in the claims. It will, therefore, be appreciated that the embodiments described above may be modified within the scope of the claims.

## Claims

1. An optical fiber, **characterized in that**, comprises from inside to outside, a quartz core layer, a quartz cladding layer, a primary coating layer made of a first polyimide coating material having a viscosity of 5000 cps to 8000 cps, and a secondary coating layer made of a second polyimide coating material having a viscosity of 6000 cps to 7000 cps, the optical fiber is resistant to temperatures of 300 degrees Celsius to 350 degrees Celsius.

2. The optical fiber of claim 1, **characterized in that**, the first polyimide coating material comprises at least one of a modified polyimide and a photosensitive polyimide, and the viscosities are 5000 cps to 6500cps and 5000 cps to 8000cps, respectively.

3. The optical fiber of claim 2, **characterized in that**, the modified polyimide is made by mixing raw materials of tetracarboxylic dianhydride compound and diamine compound that react in a first solvent, and the photosensitive polyimide is made by polymerizing dianhydride and diamine and then end capping the product with acrylic anhydride or acrylic chloride.

4. The optical fiber of claim 3, **characterized in that**, the tetracarboxylic dianhydride compound comprises pyromellitic dianhydride, 3,3'4,4'-diphenyl ether tetracarboxylic dianhydride, 3,3',4,4'-benzophenone tetracarboxylic dianhydride, 3,3',4,4'-triphenyl bis ether tetracarboxylic dianhydride, 4,4'-(hexafluoroisopropylidene) phthalic anhydride, and any combination thereof.

5. The optical fiber of claim 3, **characterized in that**, the diamine compound comprises p-phenylenediamine, m-phenylenediamine, 2,2'-bis(trifluoromethyl)-4,4'-diaminobiphenyl, 4,4'-diaminodiphenyl ether, amino modified polysiloxane, 1,3-bis(3-aminophenoxy)benzene, and any combination thereof.

6. The optical fiber of claim 3, **characterized in that**, the first solvent comprises one of N,N-dimethylformamide, N,N-diethylacetamide, and N-methylpyrrolidone .

7. The optical fiber of claim 1, **characterized in that**, the second polyimide coating material comprises common polyimide, or is made mixing raw materials of tetracarboxylic dianhydride compound and diamine compound that react in a second solvent, the tetracarboxylic dianhydride compound comprises 3,3',4,4'-benzophenone tetracarboxylic dianhydride, 3,3',4,4'-diphenyl ether tetracarboxylic dianhydride, 4,4'-(hexafluoroisopropylidene)phthalic anhydride, 2,3,3',4'-biphenyltetracarboxylic dianhydride, 3,4,3',4'-biphenyltetracarboxylic dianhydride, and any combination thereof, the diamine compound comprises p-phenylenediamine, m-phenylenediamine, 2,2'-bis(trifluoromethyl)-4,4'-diaminobiphenyl, 4,4'-bis(4-aminophenoxy)biphenyl, and any combination thereof, and the second solvent is one of N,N-dimethylformamide, N,N-diethylacetamide, and N-methylpyrrolidone.

8. The optical fiber of claim 1, **characterized in that**, a solid content of the first polyimide coating material is 10% to 25%, and a solid content of the second polyimide coating material is 10% to 28%.

9. The optical fiber of claim 1, **characterized in that**, the optical fiber is a single-mode fiber or a multi-mode fiber.

10. The optical fiber of claim 1, **characterized in that**, a sum of single-side thicknesses of the primary coating layer and the secondary coating layer is 15µm to 23µm.
